**Europäisches Patentamt**

**European Patent Office**

**Office européen des brevets**

(19)

(11) Veröffentlichungsnummer : **0 477 130 A1**

(12) **EUROPÄISCHE PATENTANMELDUNG**

(21) Anmeldenummer : **91710027.3**

(22) Anmeldetag : **06.08.91**

(51) Int. Cl.$^5$ : **F16K 17/10**

(30) Priorität : **14.08.90 DE 4025727**

(43) Veröffentlichungstag der Anmeldung :
**25.03.92 Patentblatt 92/13**

(84) Benannte Vertragsstaaten :
**CH FR GB LI**

(71) Anmelder : **Kucharzyk, Reinhard**
**Schützenstrasse 25**
**W-4050 Mönchengladbach 2 (DE)**

(72) Erfinder : **Kucharzyk, Hildegard**
**Schützenstrasse 25**
**W-4050 Mönchengladbach 2 (DE)**
Erfinder : **Kucharzyk, Uwe**
**Trimpelshütterstrasse 17a**
**W-4050 Mönchengladbach 2 (DE)**

(54) **Druckventil.**

(57)    Druckventile sind Grundgeräte hydraulischer Steuerungen, sie dienen zur Druckbegrenzung, Druck-regelung und Druckminderung.

Für Wasser als Druckmittel besteht ein Bedarf solcher Druckventile, da hier die Kavitationserosion über 70 bar Betriebsdruck ein Einsatzhindernis bildet.

Hier hilft die Druckteilung in Druckstufen durch bisher nicht bekannte steuerbare Druckverhältnis-ventile, die Gegenstand der Erfindung sind.

Erfindungsgemäß ist beispielweise einem bekannten Druckbegrenzungsventll mindestens ein steuer-bares Druckverhältnisventil (6 bis 11) vorgeschaltet, das nach DIN 24300 den Ausgangsdruck im festen Verhältnis gegenüber dem Eingangsdruck vermindert und hier zusätzlich steuerbar, sich durch Eigensteuerung auf das Verhältnis 1 zu 1 steuern läßt. Deshalb entsteht beim Einsatz eines vorgeschal-teten steuerbaren Druckverhältnisventiles eine Druckteilung in zwei Durckstufen und beim Einsatz mehrerer solcher Ventile eine Druckteilung in mehrere Druckstufen, wobei bei Druckgleichheit zwischen Ausgangsdruck und Eingangsdruck das Ventil voll öffnet.

EP 0 477 130 A1

# Fig.1

Die Erfindung betrifft ein Druckventil nach dem Oberbegriff der Patentansprüche 1 bis 3 und einem in DIN 24 300, Blatt 3, Seite 7 unter 3.6 genannten Druckverhältnisventil als ein Ventil, das den Ausgangsdruck in festem Verhältnis gegenüber dem Eingangsdruck vermindert.

Als Druckventil wurde das vorgesteuerte Druckbegrenzungsventil nach der Beschreibung RD 25815 (der Firma Rexroth) zugrunde gelegt.

Derartige Druckventile begrenzen den Druckmitteldruck als Arbeitsdruck in hydraulischen Anlagen und stellen damit ein hydraulisches Grundelement zur Sicherheit solcher Anlagen dar. Dabei besteht kein Bedarf für ein neues Druckventil bis etwa 350 bar bei der Verwendung von Öl als Druckmittel und bis etwa 70 bar bei der Verwendung von Wasser als Druckmittel, da hier die Geräuschbildung und der Verschleiß durch Kavitationserosion dieser Ventile in hydraulischen Anlagen tragbar sind. Anders ist es bei höheren Druckmitteldrücken.

Bei Verwendung von Öl als Druckmittel hilft man sich durch Druckteilung beim Arbeitsdruck über 350 bar durch hintereinanderschalten mehrerer Druckbegrenzungsventile, deren Eigenregelung aus dem geschlossenen Zustand beginnt, dagegen ist das Hintereinanderschalten von Druckregelventilen zur Druckminderung deshalb problematisch, weil diese Ventile ihre Eigenregelung aus dem geöffneten Zustand beginnen.

Für Sitz-Schaltventile besteht dagegen keine Möglichkeit der Druckteilung, so daß hier ein Bedarf eines Schaltventiles mit den Eigenschaften der Druckteilung besteht.

Bei Verwendung von Wasser als Druckmittel über 70 bar Arbeitsdruck hilft man sich gleichermaßen, jedoch sind hier die Schwierigkeiten deshalb größer, weil hier die Kavitationserosion den Ventilverschleiß derart beeinflußt, daß für viele Einzelfälle keine direkte Steuermöglichkeit besteht, ohne diesen nachteiligen Ventilverschleiß durch zeitweilige nacharbeit zu beheben.

Diese nachteile könnten durch mehrfache Druckteilung jeweils vorgeschalteter Druckverhältnisventile behoben werden, wenn es solche in der Praxis gäbe.

Die Aufgabe der vorliegenden Erfindung besteht darin, ein steuerbares Druckverhälnisventil zu schaffen, das Druckventilen vorgeschaltet, den jeweiligen Gesamt-Differenzdruckmitteldruck in Einzeldrücke aufteilt.

Damit wird die Möglichkeit geschaffen, die Einzeldrücke so gering zu halten daß Strömumgs-Kavitationserosion und damit Ventilverschleiß bei Verwendung dünnflüssiger Druckmittel vermieden wird.

Ein bestehender Wunsch der besonders für Wasser als Druckmittel gilt.

Zur Lösung dieser Aufgabe dienen erfindungsgemäß die im Kennzeichen der Ansprüche 1 bis 3 angegebenen Merkmale.

Das Druckventil nach der Erfindung bietet aufgrund seiner Ausbildung den Vorteil, daß einem Druckbegrenzungsventil mindestens ein im Druckmittelstrom vorgeschaltetes steuerbares Druckverhältnisventil den Einstellwert des Druckbegrenzungsventiles zum Druckmittelabfluß um den konstruktiv bestimmten Druckverhältnisrert des Druckverhältnisventiles am Druckmittelzufluß erhöht und bei mehreren vorgeschalteten Druckverhältnisventilen, das Produkt der Druckverhältniswerte für die Druckerhöhung zum Druckmittelzufluß maßgebend ist.

Dazu besitzt ein jedes steuerbares Druckverhältnisventil eine Sitzventilhülse, in derem Innenraum die in Öffnungsrichtung wirksame Betätigungsringfläche am jeweiligen Druckmittelzufluß kleiner ist als deren in Schließrichtung wirkende Betätigungsringfläche am jeweiligen Druckmittelweiterfluß und daß in einer dazwischen befindlichen Steuerkammer mit Steueranschluß eine Steuerringfläche bei Druckmitteldruckbeaufschlagung zusätzlich in Öffnungsrichtung wirkt, wobei die Größe der Steueringfläche der Differenz der vorgenannten Betätigungsringflächen entspricht.

Damit kann das Druckverhältnis eines Druckverhältnisventiles durch Druckmittelsteuerung der Steuerringfläche in der Steuerkammer über den Steueranschluß vom Druckverhältniswert bis zur Aufhebung dieses Druckverhältniswertes stufenlos verändert werden, wonach das Druckverhättnisventil den Druckmitteldurchfluß widerstandslos zuläßt.

Diese Möglichkeit wird daurch genutzt, daß der Steueranschluß mit dem Druckmittelabfluß des nachgeschalteten Druckbegrenzungsventiles verbunden ist.

Entstehender Druckmitteldruck am Druckmittelabfluß durch den Druckwiderstand eines angeschlossenen Verbrauchers, wie beispielsweise eines Arbeitszylinders, verändert gesteuert das Druckverhältnis des Druckverhältnisventiles. Desgleichen wird das Druckverhältnis eines Druckverhältnisventiles aufgehoben, wenn der Steueranschuß des Druckverhältnisventiles mit dem Druckmittelzufluß verbunden wird, wodurch widerstandsloser Druckmitteldurchfluß entsteht.

Weiterhin kann das Druckverhältnisventil durch Anschluß seines Steueranschlußes an einen drucklosen Druckmittelabfluß, wie dem Steuerdruckmittelabfluß zum Druckmittelbehälter, sein Druckverhältnis unabhängig jeder Steuersituation behalten.

Ein so ausgebildetes erfindungsgemäßes Druckventil ist borzugsweise für folgende Steueraufgaben in hydraulischen Anlagen geeignet:

1. Als Druckbegrenzungsventil mit mindestens zwei Druckstufen für Wasser als Druckmittel, das aus einem bekannten Druckbegrenzungsventil mit mindestens einem in Linie vorgeschalteten steuerbaren Druckverhältnisventil besteht, dessen Steueranschluß mit dem Steuerdruckmittelabfluß verbunden ist, so daß keine gesteuerte Veränderung des Druckverhältnisses im Druckverhältnisventil erfolgt, wobei sich vorzugsweise die Kolbenstange des Druckverhältnisventiles auf dem Sitzventilkolben des nachgeschalteten Druckbegrenzungsventiles abstützt.

2. Als ein als Druckbegrenzungsventil einsetzbares Druckhalteventil, das insgesamt einen eingestellten Druck am Druckmittelzufluß hält und zwar unabhängig eines am Druckmittelabfluß einstellenden Druckes durch einen daran angeschlossenen Verbraucher, wie beispielsweise einem Arbeitszylinder und bei Druckgleichheit zwischen Druckmittelzufluß und Druckmittelabfluß zum widerstandslosen Druckmitteldurchfluß öffnet.

Dazu besitzt das Druckhalteventil mit mindestens zwei Druckstufen für Wasser als Druckmittel, ein besonderes Druckbegrenzungsventil mit einem Stufenkolben mit Sitz, auf dem sich vorzugsweise die Kolbenstange mindestens eines Druckverhältnisventiles abstützt, dessen Steueranschluß mit dem Druckmittelabfluß verbunden ist.

Dabei ist der Stufenkolben mit Sitz in Übereinstimmung der Kolbenstagenflächen und Kolbenflächen der davor befindlichen Druckverhältnisventile so ausgebildet, daß entgegengesetzt wirkende Druckmittelkräfte auf den Stufenkolben mit Sitz gleich groß bleiben und zwar unabhängig unterschiedlichen Druckmitteldruckes am Druckmittelabfluß, so daß ein daran angeschlossener

Arbeitszylinder unabhängig seiner Arbeitsleistung bis zum Druckmitteldruck am Druckmittelzufluß eine gleichbleibende Hubgeschwindigkeit ausführt.

Durch ein dem Steuerdruckmittelabfluß nachgeschaltetes Vorsteuerventil wird das Druckbegrenzungs- oder Druckhalteventil zum Schaltventil.

Die Vorsteuerungen der hier beschriebenen Druckventile lassen sich durch eine direkte einstellbare Federbetätigung auf den Hauptsteuerkolben oder eine fernsteuerbare Vorsteuereinrichtung ersetzen.

3. Das zuvor beschriebene Druckverhältnisventil, das zur Funktion ein nachgeschaltetes Druckbegrenzungs- oder Druckregelventil benötigt, wird zu einem eigengesteuerten Druckregelventil, wenn der Sitzdurchmesser der Sitzventilhülse gleich oder kleiner des Durchmessers des in der Sitzventilhülse befindlichen Kolbens ist.

Wenn dieses Ventil in einem Ventilgehäuse untergebracht, mit seiner herausragenden Kolbenstange im Ventilgehäuse druckmitteldicht befestigt, in eine Kammer geführt und am Steueranschluß eine Vorsteuereinrichtung besitzt, so wird dieses Ventil bei Durchmessergleichheit zwischen dem Sitzdurchmesser der Sitzventilhülse und dem Kolbendurchmesser zum Druckregelventil,

Wird der Kolbendurchmesser größer ausgeführt als der Sitzdurchmesser der Sitzventilhülse, so wird dieses Ventil zum Druckverhältnisventil mit sich stetig änderndem Druckverhältniswert während eines Steuervorganges und zwar von einem einstellbaren Druckverhältniswert bis zur Aufhebung desselben, was dem gewünschten Schaltablauf der Druckentspannung eines federnd eingespannten Druckmittelvolumens entspricht,

Auch hier führt ein vorgeschaltetes Druckverhältnisventil zur Druckteilung beim Einsatz von Wasser als Druckmittel. Mit einem Vorsteuerventil versehen wird dieses Ventil zu einem Schaltventil damit gesteuerter Arbeitszylinder, das Druckschläge in Druckmittelrücklaufleitugen vermeidet.

Insgesamt betrifft die Erfindung ein Druckventil, das als steuerbares Druckverhältnisventil wirksame Betätigungsringflächen aufweist zwischen denen sich eine Steuerringfläche in einer abgedichteten Steuerkammer mit einem Steueranschluß befindet, in der Druckmitteldruck im Sinne der Ventilöffnung wirkt und daß diese Steuerkammer innerhalb einer Sitzventilhülse durch darin befindliche Kolben mit einer an einem Ventilgehäuse abgestützten Kolbenstange mit Steueranschluß im dafür ausgebildeten Ventilgehäuse untergebracht ist, wodurch der Druckmittelstrom zu einem nachgeschalteten Druckventil fließt und der Steueranschluß mit dem Steuerdruckmittelabfluß des nachgeschalteten Druckventiles verbunden ist.

Weiterhin sind in den Zeichnungen dargestellte gleitende Spaltdichtunge bei dünnflüssigen Druckmitteln mit zusätzlichen Dichtungen versehen und dargestellte Ventilsitze durch Zylinderspaltdichtungen ersetzbar.

Daß dargestellte Ventilteile und Ventilgehäuse mehrteilig ausgeführt sein können sei abschließend vermerkt.

Im folgenden Teil der Beschreibung werden drei Ausführungsbeispiele der Erfindung anhand von Zeichnungen beschrieben.

Es zeigt

Fig. 1 den Schnitt durch ein Druckventil, das aus einem Druckbegrenzungsventil mit vorgeschaltetem steuerbaren Druckverhältnisventil besteht.

Fig. 2 den Schnitt durch ein Druckventil, das aus einem besonderen Druckbegrenzungsventil mit einem angepaßten Stufenkolben mit Sitz und einem vorgeschalteten steuerbaren Druckverhältnisventil besteht.

Fig. 3 den Schnitt durch ein Druckventil, das aus einem steuerbaren Druckverhältnisventil besteht.

Das in Fig, 1 dargestellte Druckventil, das aus einem bekannten Druckbegrenzungsventil mit vorgeschaltetem steuerbaren Druckverhältnisventil beseht, besitzt im Ventilgehäuse 4 die Einstelleinrichtung 21, die über die Feder 20 auf den Sitzventilkolben 18 in der Kammer 19 wirkt und den aus der Steuerkammer 15 durch die Bohrung 22 ausfließende Steuerdruckmittelstrom als Vorsteuerung in seinem Druck begrenzt, wonach dieses Steuerdruckmittel drucklos durch den Steuerdruckmittelabfluß 3 in den Druckmittelbehälter abfließt.

Zur Hauptsteuerung besitzt dieses Druckventil den mit einer Feder im Ventilgehäuse 4 abgestützten Sitzventilkolben 17 mit dem Sitz 13, der den Druckmittetftuß aus der Betätigungskammer 12 durch die Ringkammer 14 in den Druckmittelabfluß 2 in abhängigkeit des Einstellwertes der Vorsteuerung 18, 20, 21 im Druck begrenzt.

Dabei fließt Steuerdruckmittel aus dem Druckmittelzufluß 1 durch die Bohrung 9 mit Düse 16 in die Steuerkammer 15,

Druckmittelzuflußseitig ist auf dem Sitzventilkolben 17 mit Sitz 13 die Kolbenstange 11 mit dem Durchmesser D3 und der Kolben 7 mit dem Durchmesser D2 aufgesetzt, die von der Sitzventithülse 6 umschlossen sind, wobei die Sitzventilhülse 6 zum Druckmittelzufluß 1 mit dem Ventilsitzdurchmessee D1 abdichtet.

Dadurch bilden sich die Betätigungskammer 5 mit der Druckmittelfläche F1, dei Steuerkammer 8 mit der Druckmittelfläche F2, die über die Verbindung 10 mit der Ringkammer 14 verbunden ist und die Druckmittelfläche F3 in der Betätigungskammer 12.

In Abhängigkeit des Flächenverhältnisses der Druckmittelflächen F1 zu F3 bildet sich umgekehrt ein Druckverhältnis von der Betätigungskammer 12 zum höheren Druck am Druckmittelzufluß 1 als Druckverhältnis.

Dieses Druckverhältnis ändert sich durch Steuerung vom Druckmittelabfluß 2, wenn hier durch Arbeitsleistung oder Drosselung ein Druck entsteht, der durch die Ringkammer 14 und die Verbindung 10 in der Steuerkammer 8 auf die Druckmittelfläche F2 in pfeilrichtung wirkt.

Steigt durch Arbeitsleistung oder Drosselung der Druckmitteldruck am Druckmittelabfluß 2 auf den Wert des Druckmittelzuflußes 1 an, so werden die Druckmittelflächen F1, F2 und F3 mit dem gleichen Druck jeweils in Pfeilrichtung beaufschlagt, das Druckverhältnïs wird 1 zu 1 und die Sitzventilhülse 6 erhält Rückschlagventilwirkung, so daß diese mit dem Sitzventilkolben 17 zum freien Druckmitteldurchfluß öffnet.

Dadurch hält dieses Druckventil einen Einstelldruck am Druckmittelzufluß 1 unabhängig eines am Druckmittelabfluß 2 durch Arbeitsleistung oder Drosselung bis zu diesem Wert entstehenden Druckmitteldruckes und könnte deshalb auch Druckhalteventil mit zwei Druckstufen genannt werden, wobei zwischen dem Druckmittelzufluß 1 und der Betätigungskammer 12 die erste Druckstufe und zwischen der Betätigungskammer 12 und dem Druckmittelabfluß 2 die zweite Druckstufe entsteht, wenn der Sitzdurchmesser 13 der zylinderischen Abdichtung zur Steuerkammer 15 am Sitzventilkolben 17 der Ventilgeometrie angepaßt sind.

Ein Nachteil ist, daß das Steuerdruckmittel keine Druckteilug in Druckstufen aufweist.

Beträgt beispielsweise der Einstelldruck am Druckbegrenzungsventil 100 bar und das Flächenverhältnis der Druckmittelflächen F1 zu F3 = 1 zu 2, so entsteht ein Einstelldruck am Druckmittelzufluß 1 von 200 bar, mit einer Druckteilung von 2 mal 100 bar oder zwei Druckstufen mit je 100 bar,

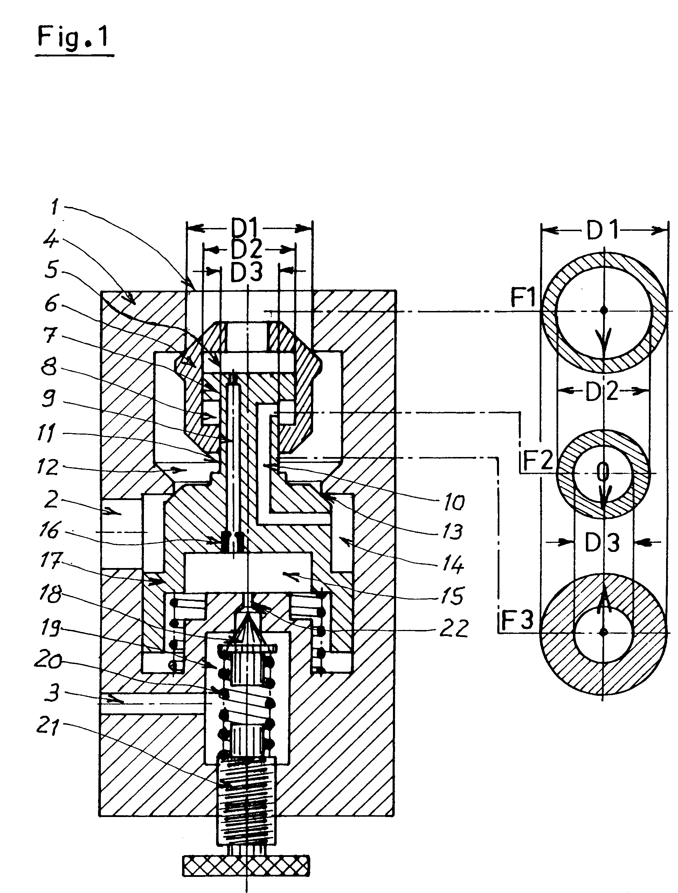

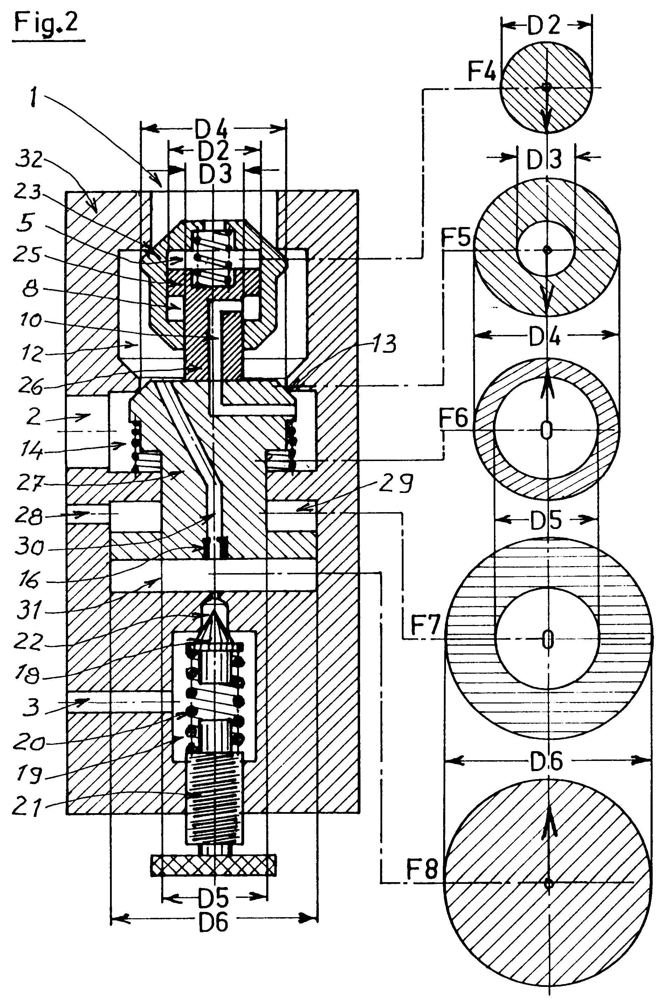

Das in Fig. 2 dargestellte Druckventil, das aus einem Druckbegrenzungsventil und einem vorgeschalteten steuerbaren Druckverhältnisventil besteht, besitzt das in Fig. 1 beschriebene gleiche steuerbare Druckverhältnisventil 6, 7, 8, 10 in der Betätigungskammer 12, dessen Kolbenstange 26 sich Druckmittelzuflußseitig auf dem Stufenkolben mit einem Sitz 27 abstützt und dessen Sitzventilhülse 23 sich durch eine Feder am Kolben 25 abstützt und so gegen den Druckmittelzufluß 1 gehalten wird.

Gleichermaßen ist im Druckbegrenzungsventil die in Fig. 1 beschriebene Vorsteuerung 18, 20, 21 in der Kammer 20 vorhanden, die das aus der Steuerkammer 31 durch die Bohrung 22 in die Kammer 20 ausfließende Steuerdruckmittel einstellbar in seinem Druck begrenzt,

Zur Hauptsteuerung besitzt dieses Druckbegrenzungsventil den mit einer Feder im Ventilgehäuse 32 abgestützten Stufenkolben mit einem Sitz 27 und dem Ventilsitzdurchmesser D4, der den Druckmittelfluß in Abhängigkeit der Einstellung der Vorsteuerung 18, 20, 21 im Druck begrenzt und so diesen Druckmittelfluß aus der Betätigungskammer 12 durch die Ringkammer 14 in den Druckmittelabfluß 2 steuert.

Dabei fließt Steuerdruckmittel aus der Betätigungskammer 12 durch die Bohrung 30 mit Düse 16 in die Steuerkammer 31, wobei die Verbindung 10 für den Steuerdruckmittelfluß zwischen der Steuerkammer 8 und der Ringkammer 14 sorgt,

Außerdem besitzt der Stufenkolben mit einem Sitz 27 die Steuerstange mit dem Dichtdurchmesser D5, den Steuerkolben mit dem Durchmesser D6, die mit dem Ventilsitzdurchmesser D4 im Ventilgehäuse 32 die Steuerkammer 31 mit der Druckmittelfläche F8 und die Ringkammer 29 mit der Druckmittelfläche F7 bilden, wobei die Ringkammer 14 die Druckmittelfläche F6 aufweist. Weiterhin bestehen die Druckmittelflächen F4 mit dem Kolbendurchmesser D2, die Druckmittelfläche F5 mit dem Ventilsitzdurchmesser D4 und dem Kolbenstangendurchmesser D3 für die Druckmittelbeaufschlagung.

Für die Funktionen dieses Druckventiles bestehen folgende Voraussetzungen:

1. Die Druckmittelfläche F7 besitzt keine Druckmittelkraft, da die Ringkammer 29 durch den Leckagedruckmittelabfluß 28 stets drucklos ist.

2. Die Druckmittelfläche F6 besitzt die Druckmittelkraft des Druckes im Druckmittelabfluß 2.

3. Die Druckmittelfläche F5 besitzt die Druckmittelkraft des Druckes in der Betätigungskammer 12 und die Druckmittelfläche F4 besitzt die Druckmittelkraft vom Druck im Druckmittelzufluß 1 bis zum gleichen Druck im Druckmittelabfluß 2, der sich hier durch Arbeitsleistung oder Drosselung einstellen kann.

Steigt der Druck im Druckmittelzufluß 2 über den Einstellwert des Druckes im Druckmittelzufluß 1, so öffnet das Ventil und die Druckmittelflächen F4 und F5 werden durch die Fläche des Ventilsitzdurchmessers D4 erstzt.

4. Die Druckmittelfläche F8 besitzt die Druckmittelkraft des Einstelldruckes der Vorsteuerung.

Unter diesen Voraussetzungen ergeben sich folgende Funktionen:

1. Kein Druck am Druckmittelabfluß 2.

Die Druckmittelfläche F6 besitzt keine Druckmittelkraft, so daß die Druckmittelkraft der Druckmittetfläche F8 in Pfeilrichtung gegen die Druckmittelkraft der Druckmittelfläche F5 mit dem Druck aus der Betätigungskammer 12 und der Druckmittelkraft der Druckmittelfläche F4 aus dem Druck des Druckmittelzuflußes 1 in pfeilrichtung entgegenwirkt.

Dabei wied der Einstelldruck in der Betätigungskammer 12 um das Druckverhältnis des steuerbaren Druckverhältnisventiles erhöht und wirkt im Druckmittelzufluß 1.

2. Gleicher Druck am Druckmittelabfluß 2 wie am Druckmittelzufluß 1.

Die Druckmittelkraft der Druckmittelflächen F4 und F5 werden durch die Druckmittelkraft der Fläche des Ventilsitzdurchmessers D4 mit dem Druck aus dem Druckmittelzufluß 1 ersetzt und wirkt gegen die Druckmittelkraft der Druckmittelfläche F6 des Druckes aus dem Druckmittelabfluß 2 und gegen die Druckmittelkraft der Druckmittelfläche F8.

Dabei öffnet das Ventil für freien Druckmitteldurchfluß und bleibt bei weiterer Druckerhöhung über den Einstelldruck geöffnet,

Dadurch hält dieses Druckventil einen Einstelldruck am Druckmittelzufluß 1 unabhängig eines am Druckmittelabfluß 2 durch Arbeitsleistung oder Drosselung bis zu diesem Wert entstehenden Druckmitteldruckes und könnte deshalb auch Druckhalteventil mit zwei Druckstufen genannt werden, wobei zwischen dem Druckmittelzufluß 1 und der Betätigungskammer 12 die erste Druckstufe und zwischen dieser und dem Druckmittelabfluß 2 die zweite Druckstufe entsteht.

Bei diesem Ventil besteht auch der Vorteil der Druckteilung des Steuerdruckmittels in Druckstufen.

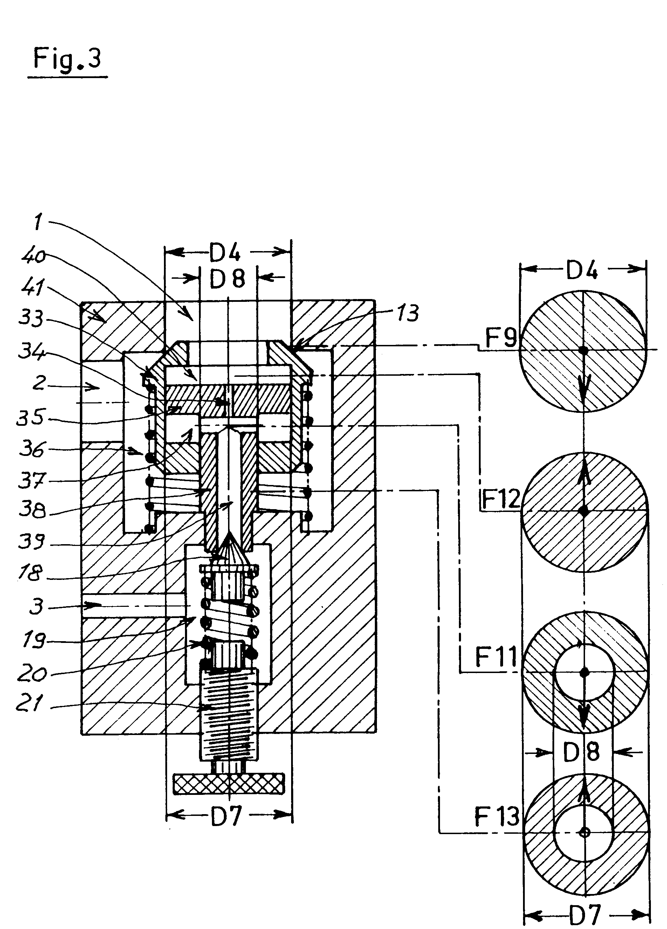

Das in Fig. 3 dargestellte Druckventil, das aus einem steuerbaren Druckverhältnisventil besteht, besitzt im Ventilgehäuse 41 die an diesem durch eine Feder abgestützte Sitzventilhülse 33 mit dem Sitz 13 in der sich der Kolben 35 mit der herausragenden und am Ventilgehäuse 41 abgestützten Kolbenstange 38 befindet und folgende Betätigungsflächen aufweist:

1. Die Druckmittelfläche F12 des Kolbendurchmessers D7.

2. Die Druckmittelfläche F9 des Ventildurchmessers D4.

3. Die Druckmittelfläche F11 zwischen dem Kolbendurchmesser D7 und dem Kolbenstangendurchmesser D8.

4. Die Druckmittelfläche F13, der gleichen Größe wie F11 mit den gleichen Durchmessern.

Beim Einsatz dieses Druckventiles als Druckregel- oder Druckminderventil mit gleichen Durchmessern D4 und D7 besteht folgender Steuerablauf:

Der am Druckmittelzufluß 1 anstehende Druckmitteldruck erzeugt auf die Druckmittelflächen F9 und F12 gleichgroße und in Pfeilrichtung entgegen wirkende Druckkräfte, wodurch die Sitzventithütse 33 nicht beeinflußt wird.

Der Steuerdruckmittelfluß aus dem Druckmittelzufluß 1 durch die Düsenbohrung 34 und die Steuerkammer 37 und durch die Bohrung 39 wird vom Einstellwert der Vorsteuerung 18, 20, 21 im Druck begrenzt und wirkt mit diesem Druck auf die Druckmittelfläche F11, der sich auch auf die gleich große Druckmittelfläche F13 in der Ringkammer 36 und am Arbeitsdruckmittelabfluß 2 einstellt und das ohne jegliche Beeinflussung des Druckes am Druckmittelzufluß 1.

Dabei erfolgt die Bestimmung der Druckbegrenzung des Steuerdruckmittels vom Einstellwert des Sitzventilkolbens 18, über die Feder 20 durch Einstelleinrichtung 21, wonach dieses Steuerdruckmittel drucklos durch die Kammer 19 und den Steuerdruckmittelabfluß 3 in den Druckmittelbehälter fließt.

Damit beginnt die Steuerung oder Regelung dieses Druckventiles als Druckregel- oder Druckminderventil borteilhaft vom geschlossenen Zustand aus und nicht vom geöffneten Zustand, wie die bekannten Druckregel- oder Druckminderventile,

Mit dem gleichen Aufbau, jedoch mit einer am Druckmittelzufluß 1 wirksamen größeren Druckmittelfläche F12 als F9, deren Flächendifferenz -Druckmittelkraft im Sinne des Schließens wirkt, besitzt dieses Druckventil zum vorbeschriebenen Druckventil ein liniges Verhalten des Druckmitteldruckes am Druckmittelzufluß 1 zum Druckmitteldruck am Druckmittelabfluß 2.

So stellt sich beispielsweise beim Flächenverhältnis der Druckmittelfläche F9 zu F12 = 1 zu 1,05 beim Druckmittelzuflußdruck von 320 bar ein eingestellter Druckmittelabflußdruck von 6 bar als Druckstoß in die Druckmittel-Rückflußleitungen und beim abgesunkenen Druckmittelzuflußdruck auf etwa 24 bar ein Druckmittelabflußdruck von etwa 20 bar ein, wonach dieses Druckventil voll öffnet.

In den Patentansprüchen und in der Beschreibung bedeuten:

| | | |
|---|---|---|
| 1 = Druckmittelzufluß | 32 = Ventilgehäuse | |
| 2 = Druckmittelabfluß | 33 = Sitzventilhülse | |
| 3 = Steuerdruckmittelabfluß | 34 = Düsenbohrung | |
| 4 = Ventilgehäuse | 35 = Kolben | |
| 5 = Betätigungskammer | 36 = Ringkammer | |
| 6 = Sitzventilhülse | 37 = Steuerkammer | |
| 7 = Kolben | 38 = Kolbenstange | |
| 8 = Steuerkammer | 39 = Bohrung | |
| 9 = Bohrung | 40 = Betätigungskammer | |
| 10 = Verbindung | 41 = Ventilgehäuse | |
| 11 = Kolbenstange | | |
| 12 = Betätigungskammer | D1 = Ventilsitzdurchmesser | |
| 13 = Sitz | D2 = Kolbendurchmesser | |
| 14 = Ringkammer | D3 = Kolbenstangendurchmesser | |
| 15 = Steuerkammer | D4 = Ventilsitzdurchmesser | |
| 16 = Düse | D5 = Dichtdurchmesser | |
| 17 = Sitzventilkolben | D6 = Stufenkolbendurchmesser | |
| 18 = Sitzventilkolben | D7 = Kolbendurchmesser | |
| 19 = Kammer | D8 = Kolbenstangendurchmesser | |
| 20 = Feder | | |
| 21 = Einstelleinrichtung | F1 = Druckmittelfläche | |
| 22 = Bohrung | F2 = Druckmittelfläche | |
| 23 = Sitzventilhülse | F3 = Druckmittelfläche | |
| | F4 = Druckmittelfläche | |
| 25 = Kolben | F5 = Druckmittelfläche | |
| 26 = Kolbenstange | F6 = Druckmittelfläche | |
| 27 = Stufenkolben mit einem Sitz | F7 = Druckmittelfläche | |
| | F8 = Druckmittelfläche | |
| 28 = Leckagedruckmittelabfluß | F9 = Druckmittelfläche | |
| 29 = Ringkammer | F11 = Druckmittelfläche | |
| 30 = Bohrung | F12 = Druckmittelfläche | |
| 31 = Steuerkammer | F13 = Druckmittelflöäche | |

**Patentansprüche**

1. Druckventil, bestehend aus einem über eine Feder an einem Ventigehäuse (4) abgestützten ersten Sitzventilkolben (17) eines Hauptsteuerventiles zur Einstellung des Steuerquerschnittes für den Druckmitteldurchfluß von einem mit einer Druckmittelquelle verbundenen Druckmittelzufluß (1) zu einem mit einem Druckmittelbehälter verbundenen Druckmittelabfluß (2), wobei der Sitzventilkolben (17) des Hauptsteuerventiles eine axial durchgeführte Düsenbohrung (9, 16) aufweist und einem Vorsteuerventil mit einem über eine Feder (20) an einer Einstelleinrichtung (21) abgestützten zweiten Sitzventilkolben (18) der in Abhängigkeit von der Einstellkraft das durch die Düsenbohrung (9, 16) und eine Steuerkammer (15) fließende Druckmittel gesteuert drosselt, wobei das Druckmittel hinter dem zweiten Sitzventilkolben (18) durch eine Kammer (20) und einen Steuerdruckmittelabfluß (3) in den Druckmittelbehälter abströmt,
   **dadurch gekennzeichnet,**
   daß dem als Stufenkolben ausgebildeten ersten Sitzventilkolben (17) ein Druckverhälnisventil unter Verwendung einer Sitzventilhülse (6) vorgeschaltet ist,
   daß die Sitzventilhülse (6) mit einem gehäuseseitigen Ventilsitz am Druckmittelzufluß (1) zusammenwirkt und eine Druckmittelöffnung vom Druckmittelzufluß (1) zu ihrem Innenraum aufweist,
   daß stromabwärts vom Ventilsitz zwischen der Sitzventilhülse (6) und dem Ventilgehäuse (4) eine als Ringraum ausgebildete Betätigungekammer (12) vorgesehen ist,
   daß der Sitzventilkolben (17) über eine in der Sitzventilhülse (6) gleitend geführte Kolbenstange (11) in den Innenraum der Sitzventilhülse (6) verlängert ist und über einen am Ende der Kolbenstange (11) angeordneten kolben (7) den Innenraum der Sitzventilhülse (6) in zwei Kammern und zwar in eine Betätigungskammer (5) und in eine Steuerkammer (8) unterteilt,
   daß die dem Ventilsitz abgewandte Steuerkammer (8) in der Sitzventilhülse (6) über eine Verbindung (10) im Sitzventilkolben (17) mit dem Druckmittelabfluß (2) steuerbar verbunden ist,
   so daß durch die Sitzventilhülse (6) axial entgegengesetzt gleich große Druckmittelflächen (F1, F2, F3) gebildet werden, von denen die eine aus der Summe (F1 + F2) von zwei Steuerringflächen gebildet wird, die sich aus der differenz zwischen dem Ventilsitzdurchmesser (D1) und dem Kolbendurchmesser (D2) und aus der Differenz zwischen dem Kolbendurchmesser (D2) und dem Kolbenstangendurchmesser (D3) ergibt und die andere entgegengesetzt gerichtete Druckmittelfläche (F3) durch eine Steuerringfläche gebildet wird, die sich aus der differenz zwischen dem Ventilsitzdurchmesser (D1) und dem Kolbenetangendurchmessser (D3) ergibt.

2. Druckventil, bestehend aus einem über eine Feder an einem Ventilgehäuse abgestützten ersten Sitzventilkolben eines Hauptsteuerventiles zur Einstellung des Steuerquerschnittes für den Druckmittelfluß von einem mit einer Druckmittelquelle verbundenen Druckmittelzufluß (1) zu einem mit einem Druckmittelbehälter verbundenen Druckmittelabfluß (2), wobei der Sitzventilkolben des Hauptsteuerventiles eine axial durchgeführte Düsenbohrung aufweist und
   einem Vorsteuerventil mit einem über eine Feder (20) an einer Einstelleinrichtung (21) abgestützten zweiten Sitzventilkolben (18), der in Abhängigkeit von der Einstellkraft des durch die Düsenbohrung und einer Steuerkammer fließende Druckmittel gesteuert drosselt, wobei das Druckmittel hinter dem zweiten Sitzventilkolben (18) durch eine Kammer (19) und einen Steuerdruckmittelabfluß (3) in den Druckmittelbehälter abströmt,
   **dadurch gekennzeichnet,**
   daß der erste Sitzventilkolben als Stufenkolben mit einem Sitz (27) ausgebildet ist, als axial durchgeführte Düsenbohrung eine axiale Bohrung (30) mit Düse (16) und als Steuerkammer eine dem Ventilsitz abgewandte Steuerkammer (31) aufweist, dem ein Druckverhältnisventil unter Verwendung einer durch eine Feder über einen Kolben (25) und eine Kolbenstange (26) auf dem Stufenkolben mit einem Sitz (27) abgestützte Sitzventilhülse (23) vorgeschaltet ist, die ihrerseits mit einem gehäuseseitigen Ventilsitz am Druckmittelzufluß (1) zusammenwirkt und eine Druckmittelöffnung vom Druckmittelzufluß (1) zu ihrem Innenraum aufweist,
   daß die gleitend in die Sitzventilhülse (23) geführte Kolbenstange (26) über einen am Ende der Kolbenstange (26) angeordneten Kolben (25) den Innenraum der Sitzventilhülse (23) in zwei Kammern und zwar in eine Betätigungskammer (5) und in eine dem Ventilsitz abgewandte Steuerkammer (8) unterteilt, daß die Steuerkammer (8) über eine in der Kolbenstange (26) und im Stufenkolben mit einem Sitz (27) befindliche Verbindung (10) und eine Ringkammer (14) mit dem Druckmittelabfluß (2) steuerbar verbunden ist,
   daß der Stufenkolben mit einem Sitz (27) zu einem Ventilgehäuse (32) eine mit einem Leckagedruckmittelabfluß (28) verbundene Ringkammer (29) und an seinem dem Ventilsitz abgewandten Ende eine Steuerkammer (31) bildet,

so daß durch die Sitzventilhülse (23) und den Stufenkolben mit einem Sitz (27) axial entgegengesetzt wirkende Druckmittelflächen (F4, F5, F6, F8) und eine wirkungslose Druckmittelfläche (F7) gebildet werden, die mit dem jeweiligen Druckmitteldruck gleiche entgegengesetzt wirkende Kräfte ausüben, von denen die eine Kraft aus der Summe (F4 + F5) von der Betätigungskammer (5) durch die Stirnfläche des Kolbens (25) mit dem Durchmesser (D2) mit dem dortigen Druckmitteldruck und aus der Differenz zwiechen dem Ventilsitzdurchmesser (D4) und dem Kolbenstangendurchmesser (D3) mit dem dortigen Druckmitteldruck und die andere entgegengesetzt wirkende Kraft aus der Summe (F6 + F8) aus der Differenz zwischen dem Ventil-Sitzdurchmesser (D4) und dem Dichtdurchmesser (D5) des Stufenkolbens mit einem Sitz (27) mit dem dortigen Druckmitteldruck und aus dem Durchmesser (D6) in der Steuerkammer (31) mit dem dortigen Druckmitteldruck gebildet wird.

3. Druckventil, bestehend aus einem über eine Feder an einem Ventilgehäuse abgestützten ersten Sitzventilkolben eines Hauptsteuerventiles zur Einstellung des Steuerquerschnittes für den Druckmittelfluß von einem mit einer Druckmittelquelle verbundenen Druckmittelzufluß (1) zu einem mit einem Druckmittelbehälter verbundenen Druckmittelabfluß (2), wobei der Sitzventilkolben des Hauptsteuerventiles eine axial durchgeführte Düsenbohrung aufweist und
einem Vorsteuerventil mit einem über eine Feder (20) an einer Einstelleinrichtung (21) abgestützten zweiten Sitzventilkolben (18), der in Abhängigkeit von der Einstellkraft des durch die Düsenbohrung und einer Steuerkammer fließende Druckmittel geeteueert drosselt, wobei das Druckmittel hinter dem zweiten Sitzventilkolben (18) durch die Kammer (19) und einen Steuerdruckmittelabfluß (3) in den Druckmittelbehälter abströmt,
**dadurch gekennzeichnet,**
daß der erste Sitzventilkolben von einer durch eine Feder an einem Ventilgehäuse (41) abgestützte Sitzventilhülse (33) mit einem kolben (35) und einer Kolbenstange (38) mehrteilig bestehend, eine axial durchgeführte Düsenbohrung (34) aufweist und als Steuerkammer eine durch den Kolben (35) in der Sitzventilhülse (33) gebildete, dem Sitzventilhülsensitz abgewandte Steuerkammer (37) mit einer Bohrung (39) in der Kolbenstange (38) besitzt,
daß die Sitzventilhülse (33) mit einem gehäuseseitigen Ventilsitz (13) am Druckmittelanschluß (1) zusammenwirkt und eine Druckmittelöffnung vom Druckmittelzufluß (1) zu ihrem Innenraum in eine Betätigungskammer (40) aufweist,
daß stromabwärts vom Ventilsitz (13)
zwischen dem Ventilgehäuse (41) und der Sitzventilhülse (33) eine Ringkammer (36) als Betätigunskammer vorgesehen ist,
daß die Kolbenstange (38) einerseits im Ventilgehäuse (41) dichtend eingesetzt und andererseits in die Ventilhülse (33) gleitend hineinragend mit dem gleitenden Kolben (35) verbunden ist, der den Innenraum der Ventilhülse in die Betätigungskammer (40) und in die Steuerkammer (37) aufteilt,
so daß bei Gleichheit des Ventil-Sitzdurchmessers (D4) und des Kolbendurchmessers (D7) durch die Sitzventilhülse (33) axial entgegengesetzt wirkende gleiche Druckmittelflächen (F9, F11, F12, F13) gebildet werden, von denen die eine aus der Summe (F9 + F11) von zwei Flächen gebildet wird, die eich aus dem Ventileitzdurchmesser (D4) und aus der Differenz des Kolbendurchmessers (D7) und dem Kolbenstangendurchmesser (D8) ergibt und die andere entgegengesetzt gerichtete. Druckmittelfläche (F12 + F13) von zwei Flächen gebildet wird, die sich aus dem kolbendurchmesser (D7) und aus der Differenz des Kolbendurchmessers (D7) und des Kolbenstangendurchmesser (D8) ergibt.

4. Druckventil nach Anspruch 1, dadurch gekennzeichnet, daß der Stufenkolben mit einem Sitz (17) keine Einheit mit der Kolbenstange (11) bildet, sondern aus mindestens zwei Teilen besteht.

5. Druckventil nach Anspruch 1 und 2, dadurch gekennzeichnet, daß die Steuerkammer (8) durch die Verbindung (10) mit der Kammer (19), dem Steuerdruckmittelabfluß (3) oder dem Leckage-druckmittelabfluß (28) in bekannter, nicht dargestellter Weise verbunden ist.

6. Druckventil nach Anspruch 1 bis 5, dadurch gekennzeichnet, daß mindestens ein zweites Druckverhältnisventil dem ersten vorgeschaltet ist, wobei das Ventilgehäuse (4, 32, 41) verlängert, die Kolbenstange (11, 26, 38) des dahinter befindlichen Druckverhältnisventiles sich auf dem Kolben (7, 25, 35) des davor befindlichen Druckverhältnisventiles abstützt und die Verbindung (10) durch den kolben des jeweils dahinter befindlichen Druckverhältnisventiles hindurchgeführt ist.

7. Druckventil nach Anspruch 1 bis 5, dadurch gekennzeichnet, daß anstelle des auf dem Stufenkolben mit einem Sitz (17, 27) abgestützten Druckverhältnisventiles an beliebiger Stelle mindestens ein Druckverhältnisventil in mindestens einem Ventilgehäuse vorgeschaltet ist, daß dabei sich die zugehörende Kolbenstange (11, 26) jeweils im Ventilgehäuse abstützt und die Verbindung (10) jeweils mit dem Druckmittelabfluß (2), dem Steuerdruckmittelabfluß (3) oder einem besondren Druckmittelanschluß steuerbar verbunden ist.

8. Druckventil nach Anspruch 3, dadurch gekennzeichnet, daß der Kolbendurchmesser (D7) größer ist als der Ventilsitzdurchmesser (D4) der Sitzventilhülse (33) mit Kolben (35) und Kolbenstange (38).

9. Druckventil nach Anspruch 3, dadurch gekennzeichnet, daß anstelle der Düsenbohrung (34) eine absperrbare Verbindung mit Düse zwischen dem Druckmittelzufluß (1) und der Bohrung (39) geschaffen wird.

# Fig.1

## Fig.2

EP 0 477 130 A1

## Fig.3

13

Europäisches
Patentamt

# EUROPÄISCHER RECHERCHENBERICHT

Nummer der Anmeldung

EP    91 71 0027

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 239 931 (MANNESMANN REXROTH GMBH) --- | | F16K17/10 |
| A | DE-A-3 318 246 (MANNESMANN REXROTH GMBH) --- | | |
| A | US-A-3 972 345 (COURT) --- | | |
| A | US-A-3 318 326 (NEVULIS) ----- | | |

RECHERCHIERTE SACHGEBIETE (Int. Cl.5)

F16K

Der vorliegende Recherchenbericht wurde für alle Patentansprüche erstellt

| Recherchenort | Abschlußdatum der Recherche | Prüfer |
|---|---|---|
| DEN HAAG | 10 DEZEMBER 1991 | CHRISTENSEN J.T. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)